# EUROPÄISCHE PATENTANMELDUNG

(11) **EP 0 829 652 A2**
(43) Veröffentlichungstag der Anmeldung: **18.03.1998**
(21) Anmeldenummer: 97114540.4
(22) Anmeldetag: 22.08.1997
(51) Int. Cl.: F16B 31/02, F16B 9/02

(54) **Fügeverbindung**

(30) Priorität: 14.09.1996 DE 19637592
(71) Anmelder: Daimler-Benz Aktiengesellschaft, 70546 Stuttgart (DE)
(72) Erfinder: Dirmeier, Georg, 70176 Stuttgart (DE); Haller, Manfred, 70184 Stuttgart (DE); Emmann, Siegfried, 71384 Weinstadt (DE)

(57) **Zusammenfassung**

Die Erfindung betrifft eine Fügeverbindung, die durch einen axialen Kraftfluß zwischen Null und unterschiedlichen Maximalwerten wechselbelastet ist, mit einem äußeren als Hohlprofil ausgebildeten Fügepartner und einem inneren in den äußeren formschlüssig eingebrachten Fügepartner. Um ein Versagen der Fügeverbindung durch einen überlastungsbedingten Ermüdungsbruch am in Fügerichtung weisenden Ende schon vor dessen Auftreten in einfacher Weise an der funktionsfähigen Fügeverbindung zu erkennen, wird vorgeschlagen, daß die Fügeverbindung einen vom in Fügerichtung weisenden Verbindungsende ausgehenden, hinteren spielbehafteten Bereich und einen sich an diesen anschließenden, vorderen spielfreien Bereich des inneren Fügepartners im äußeren Fügepartner beinhaltet, wobei der Übergang zwischen den Bereichen eine Sollbruchstelle zwischen den beiden Verbindungsenden bildet, an der einer der Fügepartner unter Ausbildung eines örtlich definiert in Querrichtung der Fügeverbindung verlaufenden Risses nach einer bestimmten Anzahl von Überbelastungen ermüdungsbedingt bricht, und daß der Abstand der Sollbruchstelle von den Verbindungsenden derart bemessen und das Zusammenwirken der Fügepartner derart gestaltet ist, daß der innere Fügepartner im äußeren Fügepartner nach dem Bruch eine wechselbelastbare Restfügeverbindung ausbildet.

## Beschreibung

Die Erfindung betrifft eine Fügeverbindung, die durch einen axialen Kraftfluß zwischen Null und unterschiedlichen Maximal-werten wechselbelastet ist.

Aus der DE 43 22 717 A1 ist eine Fügeverbindung bekannt, durch die bei einem dreiteiligen Nutzfahrzeugrahmen bestehend aus Vorderachs- und Hinterachsträgern aus Leichtmetallguß sowie aus einem die Vorderachsträger mit den Hinterachsträgern verbindenden Längsträgermittelstück eine feste Anbindung der Achslängsträger an das von Leichtmetall-Strangpreßprofilen gebildeten Längsträgermittelstück erreicht wird. Die Fügeverbindung wird durch ein den einen Fügepartner bildendes hülsenförmiges Verbindungselement gebildet, das in die Innenkontur eines den anderen Fügepartner darstellenden Hohlprofiles des Längsträgermittelstückes unter Bildung eines Form- und Kraftschlusses eingebracht wird. Zur anderen Seite hin wird das dort mit einem Innengewinde versehene Verbindungsselement beispielsweise durch Verschrauben an dem jeweiligen Achsträger befestigt. Die Fügeverbindung wird durch Wechselbelastungen in axialer Richtung, d.h. Zug und Druck sowie durch Querbelastungen während des Fahrbetriebes des Nutzfahrzeuges extrem hoch belastet, wobei es im Laufe der Betriebsdauer zu Überlastungen der Verbindung vorzugsweise im Bereich des im Profil befindlichen Endes des Verbindungselementes aufgrund fehlender Dehnfähigkeit bzw. auftretender Spannungsüberhöhung kommen kann, die zu einem Abriß des Profiles infolge eines schlagartigen Ermüdungsbruches führen. Dieser Bruch des Profiles ist dabei vorher nicht erkennbar. Durch den Abriß des Profiles wird die Fügeverbindung zerstört und das Verbindungselement verliert seine Tragfähigkeit, worauf sich der jeweilige Achsträger vom Mittelstück löst. Dabei kann es beim Fahrbetrieb insbesondere je nach Art des geladenen Frachtgutes zu unabsehbaren Unfallfolgen kommen.

Der Erfindung liegt die Aufgabe zugrunde, eine Fügeverbindung anzugeben, bei der deren Versagen durch einen überbelastungsbedingten Ermüdungsbruch am in Fügerichtung weisenden Ende schon vor dessen Auftreten in einfacher Weise an der funktionsfähigen Fügeverbindung erkannt werden kann.

Des weiteren wird aus der US 3,599,528 mit einem Druckentlastungsbolzen eine Fügeverbindung vorgestellt, die mit einem Ring einen äußeren als Hohlprofil ausgebildeten Fügepartner und mit einem Schaftabschnitt einen inneren in den äußeren formschlüssig eingebrachten Fügepartner aufweist. In einem Bereich ist der besagte Schaftabschnitt mit einem Schraubenkopf versehen, der im normalen Betriebszustand nicht zur Anlage gelangt und insofern spielbehaftet ist und erst im Störfall Kräfte übertragen kann, während die Kräfte im Betriebszustand in einem anderen Bereich formschlüssig und spielfrei durch einen Scherbolzen auf den Ring übertragen werden. Am Übergang zwischen den beiden Bereichen ist der Scherbolzen als Sollbruchstelle ausgelegt, der bei Überschreitun einer zulässigen Belastung abschert und an dieser Stelle bricht. Der spielfreie Bereich des besagten Schaftabschnittes befindet sich im Ring. Nicht zuletzt durch die Lage der Sollbruchstelle und die der beiden Fügepartner zueinandr ist die gesamte Fügeverbindung jedoch so bemessen, daß nach dem Bruch des Scherbolzens eine wechselbelastbare Restfügeverbindung verbleibt.

Schließlich ist aus der DE-OS 1 944 805 eine Verschraubung entnehmbar, welche aus einer Kopfschraube, die die miteinander zu verbindenden Teile durchsetzt, und einer auf dieser aufschraubbaren Schraubenmutter besteht, die an einem ihrer beiden Enden einen unrunden Umfang zum Ansetzen eines Schraubenschlüssels aufweist. Die Schraubenmutter weist auf einem Teil der Höhe ihres Gewindes eine ringförmige Wandschwächung auf, die beim Anziehen der Mutter mit einem Schraubenschlüssel, während ihr eines Ende sich gegen das eine der miteinander zu verbindenden Teile abstützt, beim Überschreiten eines bestimmten Drehmomentes zerbricht, so daß beim Weiterdrehen des Schraubenschlüssels der eine der beiden selbständig gewordenen Teile der Mutter gegen den anderen angezogen und dadurch eine Schraubensicherung nach Art von Kontermuttern gebildet wird.

Die Aufgabe ist erfindungsgemäß jeweils für sich durch die Merkmale des Patentanspruches 1 und 2 gelöst.

Dank der Erfindung wird der Ermüdungsbruch der Fügeverbindung von dem in Fügerichtung weisenden Verbindungsende zum anderen Verbindungsende hin verschoben, wobei durch den Bruch eines der Fügepartner nicht gleich die gesamte Verbindung zerstört wird. Vielmehr bleibt eine Restverbindung dadurch bestehen, daß die Fügepartner sich auf einer reduzierten Verbindungslänge verbindungswirksam überlappen. Dabei ist die erforderliche Festigkeit für die Verbindung gegenüber weiteren axialen Wechselbelastungen - auch gegenüber Überbelastungen - und somit eine noch ausreichende Tragfähigkeit der Verbindung gegeben. Dies wirkt sich auf die Lebensdauer der Fügeverbindung verlängernd aus, da diese nach dem ersten Bruch erst dann völlig versagt, wenn ermüdungsbedingt ein Riß am in Fügerichtung weisenden Verbindungsende auftritt. Durch die Verschiebung des am höchsten belasteten Bereiches wird dieses quasi entlastet, so daß nach dem ersten Ermüdungsbruch zwischen den Verbindungsenden noch eine Vielzahl von Wechselbelastungsspielen möglich ist, bis der zweite für das endgültige Versagen der Verbindung verantwortliche Ermüdungsbruch am in Fügerichtung weisenden Verbindungsende stattfindet. Die Verschiebung der Bruchstelle kommt dadurch zustande, daß durch die Einrichtung eines spielbehafteten und eines an diesen sich anschließenden spielfreien Bereiches am Übergang zwischen beiden Bereichen eine geringere axiale Dehnfähigkeit erreicht wird als der Bereich des in Fügerichtung weisenden Fügeverbindungsendes aufweist und deshalb Spannungsüberhöhungen von diesem Verbindungsende auf den Übergang verlagert werden. Im übrigen ist die Fügerichtung die Richtung der translatorischen Einführbewegung des inneren Fügepartners in den äußeren Fügepartner beim Fügen der beiden Fügepartner.

Der erste Riß kann sozusagen als Vorbote für den späteren Abriß der Fügeverbindung angesehen werden. Der Riß verläuft durch die Lokalisierung der Sollbruchstelle zwischen den Verbindungsenden infolge des sprunghaften Anstieges der axialen Dehnfähigkeit der Fügeverbindung, also infolge eines Steifigkeitssprunges, unmittelbar hinter der Stelle auf Seiten des Fügeverbindungsendes örtlich definiert in Querrichtung der Fügeverbindung, so daß beispielsweise in der Inspektion zur Beurteilung des Belastbarkeitszustandes in einfacher Weise und unter geringem Kostenaufwand die besagte Stelle darauf untersucht werden kann, ob dort ein Riß entstanden ist oder nicht. Bei Auftreten des in einfacher Weise erkennbaren, örtlich vorverlegten ersten Risses kann dann entsprechend durch Erneuerung der Fügeverbindungspartner eingegriffen werden, so daß wieder eine Vollwertigkeit der Fügeverbindung hinsichtlich ihrer Belastbarkeit erreicht wird. Ein schwerwiegender Folgeschaden, insbesondere bei Verwendung der Fügeverbindung an Rahmenteilen von Nutzfahrzeugen wird dadurch vermieden und somit die Sicherheit des Fahrzeuges im Fahrbetrieb erhöht.

Insgesamt erfolgt durch die Erfindung das Versagen der Fügeverbindung in zwei Schritten, die deutlich zeitlich und örtlich getrennt voneinander abfolgen, wobei bei Entstehen des ersten Risses, bei dem die Verbindung jedoch noch tragfähig, also belastbar bleibt, in einer regelmäßigen Überwachung der Stelle schon vorausgehen kann, wann die Verbindung endgültig versagt. Damit kann auch auf sonst notwendige kostenträchtige Sicherheitsmaßnahmen wie beispielsweise aufwendige seilartige Fangvorrichtungen oder Anschläge verzichtet werden, die zur Sicherung gegenüber einem unvorsehbaren Abriß am in Fügerichtung weisenden Verbindungsende vorgesehen werden.

Zweckmäßige Ausgestaltungen der Erfindung können den Unteransprüchen entnommen werden; im übrigen ist die Erfindung anhand zweier in den Zeichnungen dargestellter Ausführungsbeispiele nachfolgend näher erläutert; dabei zeigt:
Fig. 1 in einem seitlichen Längsschnitt die erfindungsgemäße Fügeverbindung als Schraubverbindung in unbeschädigtem Zustand,
Fig. 2 in einem seitlichen Längsschnitt die erfindungsgemäße Fügeverbindung von Fig. 1 mit Rißbildung an einer Sollbruchstelle,
Fig. 3 in einem seitlichen Längsschnitt die erfindungsgemäße Fügeverbindung als Schraubverbindung in unbeschädigtem Zustand mit einer Ausbauchung der Bohrung am Bohrungsende,
Fig. 4 in einem seitlichen Längsschnitt die erfindungsgemäße Fügeverbindung als Bolzen-Rohrverbindung.

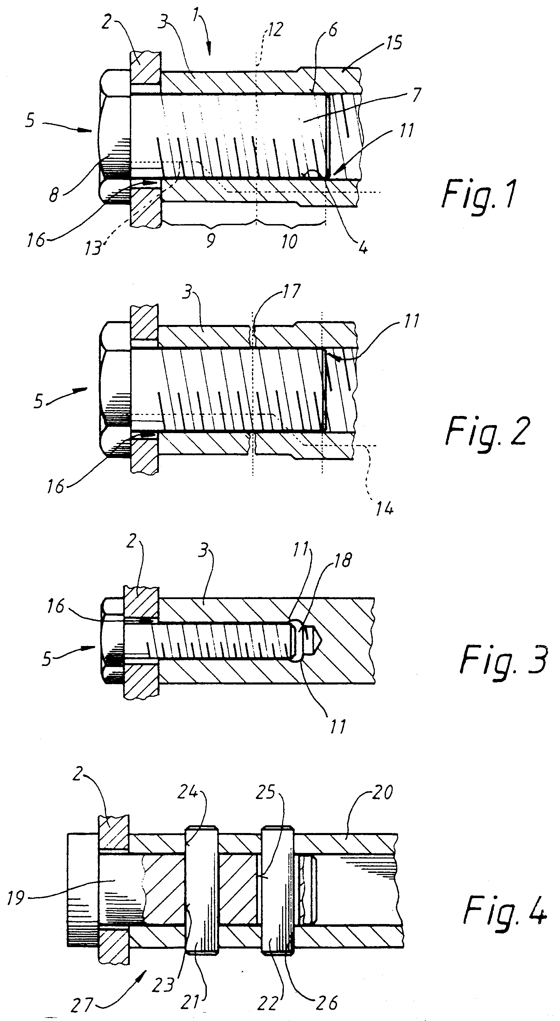

In Fig. 1 ist eine als Schraubverbindung 1 ausgebildete Fügeverbindung dargestellt, die bei Fahrzeugen, insbesondere Nutzfahrzeugen vorzugsweise Sattelzugmaschinen anwendbar sind. Bei letzteren müssen für den Zusammenbau eines Leichtbau-Modulrahmens Vorder- und Hinterachsträger, die als Leichtmetall-Gußlegierungsteile 2 ausgebildet sind, an einem Längsträger-Zwischenmodul, der von mehreren Leichtmetall-stranggepreßen Hohlprofilen 3 gebildet wird, befestigt werden.

Das Hohlprofil 3 weist dazu ein Innengewinde 4 auf, in das die Schraube 5 mit dem Außengewinde 6 ihres Schaftes 7 eingeschraubt ist. Die Schraube 5 ist über eine Teillänge ihres Schaftes 7 vom Anfang des Eingriffes der Gewinde 6,4 in der Nähe des Schraubenkopfes 8, also vom vorderen Verbindungsende 16 an mit dem Hohlprofil 3 zusätzlich verklebt, wobei der Kleber aushärtet und dadurch die Schraubverbindung 1 in einen vorderen spielfreien 9 und einen sich unmittelbar an diesen anschließenden, hinteren spielbehafteten Bereich 10 aufteilt. Für eine ausreichende Belastbarkeit einer Aluminium-Schraubverbindung 1 ist es erforderlich, daß die Überlappungslänge von Hohlprofil 3 und Schraube 5 zumindest das 2,5-fache des Schraubendurchmessers beträgt, damit die zulässige Flächenpressung bzw. die Streckgrenze der Schraube 5 nicht überschritten wird. Bei einer Stahl-Schraubverbindung liegt die Mindestüberlappungslänge im Bereich vom 1,1-fachen des Schraubendurchmessers.

Im spielfreien Bereich 9 ist die Schraubverbindung 1 sehr steif und von sehr geringer Elastizität insbesondere in axialer Richtung der Schraubverbindung 1, derart, daß sie die geringe Dehnfähigkeit der Schraubverbindung 1 am in Fügerichtung weisenden Verbindungsende 11 übertrifft. An diesem Verbindungsende 11 entsteht aufgrund der geringen axialen Dehnfähigkeit der Verbindung normalerweise bei Überbelastung eine Spannungsüberhöhung, was nach einiger Zeit zu einer Ermüdung und damit zu einem Abriß der Fügeverbindung führt. Infolge der Ausbildung eines spielfreien Bereiches 9 wird die Spannungsüberhöhung bei Überbelastung der Fügeverbindung auf den Übergang 12 des spielfreien Bereiches 9 zum spielbehafteten Bereich 10 verschoben, so daß durch den sprunghaften Übergang 12 quasi eine Sollbruchstelle geschaffen wird, an der jedoch nur einer der beiden Fügepartner, der Schraube 5 und des Hohlprofiles 3, - je nach Dimensionierung der Dicke der Schraube 5 und der Wandstärke des Hohlprofiles 3 relativ zueinander - in axialer Richtung örtlich begrenzt in Umfangsrichtung bricht. Die Verbindung bleibt jedoch tragfähig, wobei die Länge der Schraube 5 im Hohlprofil 3 in dem Bereich der Verbindung, der die Funktionsfähigkeit noch erfüllt, ausreichend sein muß.

Zu einem völligen Abriß der Schraubverbindung 1 kommt es deswegen nicht, weil diese einen spielbehafteten Bereich 10 besitzt, der nach der Rißbildung am Übergang 12 die Tragfunktion der Schraubverbindung 1 allein übernehmen kann. Dies wird verdeutlicht durch die punktiert dargestellten Kraftflußlinien 13 und 14 der Fig. 1 und 2. In Fig. 1 tritt der Kraftfluß der Schraubverbindung 1 bei normaler schadensfreier Beanspruchung im spielfreien Bereich 9 von der Schraube 5 auf das Hohlprofil 3 über und verläuft in diesem weiter. Nach der rißbildenden Überbelastung verläuft gemäß Fig. 2 der Kraftfluß bis in den ursprünglichen spielbehafteten Bereich 10 hinein, um dann erst auf das Hohlprofil 3 überzutreten.

Um den die Sollbruchstelle bildenden Übergang 12 zu schaffen, ist es auch denkbar, die Schraube 5 mit einem Kleber nur auf einem schmalen Umfangsstreifen zu versehen, der dann den Übergang 12 zu zwei spielbehafteten Bereichen 10 - jeweils einer vor und hinter dem Übergang 12 - bildet.

Wie aus beiden Fig. 1 und 2 zu erkennen ist, weist das Hohlprofil 3 am Verbindungsende 11 eine umlaufende Wandverdickung 15 auf, die eine Erhöhung der Stabilität der Verbindung an dieser Stelle bewirken soll, so daß das Verlagern eines Risses 17 auf die Sollbruchstelle begünstigt wird. Des weiteren kann durch die Anbringung einer umlaufenden Kerbe am Umfang des Hohlprofiles 3 an der Stelle des Überganges 12 die Lokalisierung des Risses 17 weiter verstärkt werden.

Der Riß 17 erfolgt entlang des Überganges 12 in Umfangsrichtung der Schraubverbindung 1. Durch den vorher festgelegten Ort des Risses 17 kann bei der Inspektion leicht erkannt werden, ob die gesamte Fügeverbindung in Gefahr ist zerstört zu werden oder nicht. Ist beispielsweise die Schraubverbindung 1 so ausgelegt, daß die Wandstärke des Hohlprofiles 3 relativ klein zur Schraubendicke ist, bricht das Hohlprofil 3 am Übergang 12, was optisch sichtbar wird, da das Hohlprofil 3 der äußere der Fügepartner ist. Ist die Wandstärke des Hohlprofiles 3 jedoch im Vergleich zur Schraubendicke groß, bricht die Schraube 5, wobei der vordere spielbehaftete Bereich 9 der Schraubverbindung 1 die weitere tragende Funktion der Verbindung besitzt. Der dabei entstehende Riß 17 ist nicht optisch sichtbar und muß durch einschlägige Detektionsgeräte beispielsweise auf Ultraschallbasis oder zur Messung der elektrischen Leitfähigkeit erfaßt werden.

Wie aus Fig. 3 entnehmbar, weist die Schraubverbindung 1 am in Fügerichtung weisenden Verbindungsende 11 keine Wandverdickung 15 auf. Um der die Haltbarkeit der Schraubverbindung 1 negativ beeinträchtigenden Kerbwirkung entgegenzutreten und um somit die Lebensdauer der Schraubverbindung 1 zu erhöhen ist die gewindetragende Bohrung des Hohlprofiles 3 am Verbindungsende 11 eine glattzylindrische axiale Erweiterung 18, einem sogenannten "Freistich" vorgesehen, die mit großem Rundungsradius faßartig ausgerundet ist.

Die Ausbildung eines spielfreien Bereiches 9 ist auf vielfältige Weise möglich. Wie oben angesprochen kann die Schraube 5 mit dem Hohlprofil 3 verklebt sein. Günstig ist dazu ein mikroverkapselter Zwei-Komponenten-Kleber, der in den Gewindegängen der Schraube 5 verteilt ist. Beim Einschrauben zerplatzen infolge der dabei auftretenden Scherkräfte die jeweils eine Kleberkomponente beinhaltenden Kapseln, wobei die Kleberkomponenten sich vermischen und nach der Aushärtung eine besonders feste und steife Klebeverbindung der beiden Fügepartner ausbilden.

Alternativ ist auch eine Schraube mit auf einem Teilabschnitt selbstfurchendem Gewinde denkbar, wobei der Innendurchmesser der Bohrung des Hohlprofiles 3 auf diesem Abschnitt kleiner sein muß als der Außendurchmesser des Außengewindes 6. Des weiteren ist es alternativ denkbar, daß auf einem Teilabschnitt des Außengewindes 6 der Schraube 5 eine eine metallische Zwischenlage, wie beispielsweise ein Metallfolienstreifen oder ein Litzenband aufgelegt ist, mit der die Schraube 5 in das Hohlprofil 3 eingeschraubt wird, wobei mit diesem Teilabschnitt der spielfreie Bereich 9 gebildet wird. Nichtmetallische Zwischenlagen wie Hanf oder ein Kunststoffolienstreifen können dabei ersatzweise ebenfalls zur Anwendung kommen.

Eine weitere Art einer Fügeverbindung ist in Fig. 4 dargestellt. Hierbei wird der innere Fügepartner von einem Steckbolzen 19 gebildet, während der äußere rohrförmige Fügepartner 20 im Gegensatz zum Hohlprofil 3 der Schraubverbindung 1 gewindelos ist. Der Steckbolzen 19 ist in den Fügepartner 20 hineingesteckt und wird von zwei Querstiften 21 und 22, die in miteinander fluchtenden Querbohrungen 23 und 24 sowie 25 und 26 der Fügepartner 19,20 einpreßt sind, gehalten. Der Querstift 21 ist in die vorderen Querbohrungen 23 und 24 unter Bildung einer spielfreien Preßpassung sowohl im Steckbolzen 19 als auch im Fügepartner 20 eingefügt. Der Querstift 22 dagegen liegt zwar in der hinteren Querbohrung 26 des Fügepartners 20 preßgepaßt, jedoch innerhalb der hinteren Querbohrung 25 des Steckbolzens 19 mit viel Spiel. Dafür ist die Querbohrung 25 in axialer Richtung der Fügeverbindung langlochartig erweitert.

Aufgrund der durch die hochfeste Verbindung der Fügepartner 19,20 mittels des vorderen Querstiftes 21 sehr geringen axialen Dehnfähigkeit der Fügeverbindung an dieser Stelle wird die Verbindung dort mehr belastet als am in Fügerichtung weisenden Verbindungsende 11. Dadurch zeigt sich eine Überbelastung der Verbindung in einem Riß 17 nur eines Fügepartners - je nach Dimensionierung der Wandstärke des Fügepartners 20 oder der Dicke des Steckbolzens 19 relativ zueinander -, wonach der spielbehaftete Bereich der Verbindung am Ort des zweiten hinteren Querstiftes 22 die für die weitere Belastungsfähigkeit der Verbindung erforderliche Tragfähigkeit erbringt. Die Wahl der Form des Querschnittes des Fügepartners 20, d.h. des Hohlprofiles ist bei der beschriebenen Bolzen-Rohr-Fügeverbindung 27 frei.

Eine weitere Möglichkeit der Befestigung des Steckbolzens 19 im Fügepartner 20 besteht in einer Verklebung, wobei ein vorderer mit einem aushärtenden Kleber bestrichener Bereich des Steckbolzens 19 mit dem Fügepartner 20 eine sehr steife, axial nur geringelastische Verbindung bildet und wobei der sich an diesen Bereich anschließende hintere Bereich des Steckbolzens 19 mittels einem dauerelastischen Kleber mit dem Fügepartner 20 verklebt ist, welcher Auslenkungen des Steckbolzens 19 im Rahmen eines Spieles in axialer Richtung zuläßt.

Resümierend wird erfindungsgemäß also eine Fügeverbindung vorgeschlagen, die in Bereiche unterschiedlicher axialer Dehnfähigkeit des in den als Hohlprofil 3,20 ausgestalteten äußeren Fügepartner eingebrachten inneren Fügepartners 5,19 in der Verbindung getrennt, wobei die Änderung der Dehnfähigkeit an der Stelle des Übergangs 12 der Bereiche ineinander sprunghaft erfolgt. An diesem Übergang 12 treten nun anstatt am in Fügerichtung weisenden Ende 11 der Verbindung bei Überlastungen Spannungsüberhöhungen auf, durch welche ermüdungsbedingt nach einer bestimmten Anzahl von Belastungsspielen dort ein Riß 17 an einem der beiden Fügepartner je nach Auslegung des Verhältnisses der Wandstärke des Profiles 3,20 zur Dicke des inneren Fügepartners 5,19 entsteht. Ein Ermüdungsbruch am in Fügerichtung weisenden Ende der Verbindung wird dadurch zeitlich hinausgezögert. Der Bereich der Fügeverbindung zwischen einem Riß 17 am Profil 3,20 und dem Ende der Fügeverbindung 11 weist nach dieser Rißbildung für weitere Wechselbelastungen in Fügerichtung noch ausreichende Trägfähigkeit auf. Ist eine Rißbildung am inneren Fügepartner 5,19 vorgesehen, trägt der Bereich der Verbindung zwischen Riß 17 und dem fügerichtungsabgewandten Verbindungsende 16. Erst zu einem späteren Zeitpunkt tritt am Verbindungsende 11 in Fügerichtung aus genannten Gründen eine Rißbildung auf, die die tragfähige Verbindung schließlich vollends zerstört. Der Übergang 12 zwischen den Bereichen 9,10 stellt eine örtlich gezielt eingerichtete Sollbruchstelle dar, an der das Auftreten eines hinsichtlich des die Fügeverbindung auflösenden Risses vorausgehenden ersten, axial mit Abstand zu diesem versetzten Risses 17 als Indikator für den Belastbarkeitszustand der Fügeverbindung und damit als Hinweis auf ein späteres völliges Versagen der Fügeverbindung fungiert.

## Patentansprüche

1. Fügeverbindung, die durch einen axialen Kraftfluß zwischen Null und unterschiedlichen Maximalwerten wechselbelastet ist, mit einem äußeren als Hohlprofil ausgebildeten Fügepartner und einem inneren in den äußeren formschlüssig eingebrachten Fügepartner, wobei die Fügeverbindung eine Schraubverbindung (1) ist, deren innerer Fügepartner von einer Schraube (5) und deren äußerer Fügepartner von einem innengewindetragenden Hohlprofil (3) gebildet ist, dessen Innengewinde (4) sich zumindest über die Länge des Außengewindes (6) der Schraube (5) erstreckt, und wobei die Schraubverbindung (1) einen vom in Fügerichtung weisenden Verbindungsende (11) ausgehenden, hinteren spielbehafteten Bereich (10) und einen sich an diesen anschließenden, vorderen spielfreien Bereich (9) der Schraube (5) im Hohlprofil (3) beinhaltet, wobei der Übergang (12) zwischen den Bereichen (9,10) eine Sollbruchstelle zwischen den beiden Verbindungsenden (11,16) bildet, an der einer der von der Schraube (5) und dem Hohlprofil (3) gebildeten Fügepartner unter Ausbildung eines örtlich definiert in Querrichtung der Schraubverbindung (1) verlaufenden Risses (17) nach einer bestimmten Anzahl von Überbelastungen ermüdungsbedingt bricht, und daß der Abstand der Sollbruchstelle von den Verbindungsenden (11,16) derart bemessen und das Zusammenwirken der Schraube (5) mit dem Hohlprofil (3) derart gestaltet ist, daß die Schraube (5) im Hohlprofil (3) nach dem Bruch eine wechselbelastbare Restfügeverbindung ausbildet.

2. Fügeverbindung, die durch einen axialen Kraftfluß zwischen Null und unterschiedlichen Maximalwerten wechselbelastet ist, mit einem äußeren als Hohlprofil ausgebildeten Fügepartner und einem inneren in den äußeren formschlüssig eingebrachten Fügepartner, wobei die Fügeverbindung eine Bolzen-Rohr-Steckverbindung (27) ist, deren innerer Fügepartner von einem gewindelosen Steckbolzen (19) gebildet ist, der im äußeren rohrförmig ausgebildeten Fügepartner (20) im Bereich des Verbindungsendes (11) und zwischen den Verbindungsenden (11,16) gehalten ist, und wobei die Steckverbindung (27) einen vom in Fügerichtung weisenden Verbindungsende (11) ausgehenden, hinteren spielbehafteten Bereich (10) und einen sich an diesen anschließenden, vorderen spielfreien Bereich (9) des Steckbolzens (19) im rohrförmigen Fügepartner (20) beinhaltet, wobei der Übergang (12) zwischen den Bereichen (9,10) eine Sollbruchstelle zwischen den beiden Verbindungsenden (11,16) bildet, an der einer der Fügepartner (3,5; 19,20) unter Ausbildung eines örtlich definiert in Querrichtung der Fügeverbindung (1,27) verlaufenden Risses (17) nach einer bestimmten Anzahl von Überbelastungen ermüdungsbedingt bricht, und daß der Abstand der Sollbruchstelle von den Verbindungsenden (11,16) derart bemessen und das Zusammenwirken der Fügepartner (19,20) derart gestaltet ist, daß der Steckbolzen (19) im rohrförmigen Fügepartner (20) nach dem Bruch eine wechselbelastbare Restfügeverbindung ausbildet.

3. Fügeverbindung nach Anspruch 1,
**dadurch gekennzeichnet,**
der spielfreie Bereich (9) durch Verkleben der Fügepartner (3,5) mittels eines aushärtenden Klebers gebildet ist.

4. Fügeverbindung nach Anspruch 3,
**dadurch gekennzeichnet,**
daß der Kleber mikroverkapselt in den Gewindegängen des Außengewindes (6) der Schraube (5) angeordnet ist, wobei beim Ineinanderschrauben der Fügepartner (3,5) die Kleberkapseln aufplatzen und verklebend reagieren.

5. Fügeverbindung nach Anspruch 1,
**dadurch gekennzeichnet,**
daß auf einem Teilabschnitt der Schraubverbindung (1) der Innendurchmesser des Hohlprofiles (3) kleiner ist als der Außendurchmessers der Schraube (5), wobei die Schraube (5) auf diesem den spielfreien Bereich (9) bildenden Abschnitt in das Hohlprofil (3) in selbstfurchend wirkender Weise eingeschraubt ist.

6. Fügeverbindung nach Anspruch 1,
**dadurch gekennzeichnet,**
daß auf einen Teilabschnitt der Schraubverbindung (1) auf das Außengewinde (6) der Schraube (5) eine metallische oder nichtmetallische Zwischenlage aufgelegt ist, mit der dieser in das Hohlprofil (3) eingeschraubt ist, wobei mit diesem Abschnitt der spielfreie Bereich (9) der Schraubverbindung (1) gebildet ist.

7. Fügeverbindung nach Anspruch 1,
**dadurch gekennzeichnet,**
daß der innengewindetragende Teil der Bohrung des Hohlprofiles (3) am in Fügerichtung weisenden Verbindungsende (11) in eine glattzylindrische axiale Erweiterung (18) übergeht, die mit großem Rundungsradius faßartig ausgerundet ist.

8. Fügeverbindung nach Anspruch 2,
**dadurch gekennzeichnet,**
daß der gewindelose Steckbolzen (19) über seine gesamte Länge hinweg mit dem rohrförmig ausgebildeten Fügepartner (20) verklebt ist, wobei der Steckbolzen (19) an diesem zur Bildung der Sollbruchstelle auf einem Längenabschnitt ausgehärtet und auf seiner restlichen Länge in axialer Richtung dauerelastisch verklebt ist.

9. Fügeverbindung nach Anspruch 2,
**dadurch gekennzeichnet,**
daß der gewindelose Steckbolzen (19) von zumindest zwei axial beabstandeten Querstiften (21,22) im rohrförmig ausgebildeten Fügepartner (20) gehalten ist, wobei der dem in Fügerichtung weisenden Verbindungsende (11) ferne Querstift (21) mit dem Steckbolzen (19) spielfrei und der andere Querstift (22) mit dem Steckbolzen (19) in axialer Richtung der Fügeverbindung spielbehaftet verbunden ist.
